# EUROPEAN PATENT SPECIFICATION

(11) **EP 0 736 231 B1**
(45) Date of publication and mention of the grant of the patent: **19.11.1997**
(21) Application number: 95904733.3
(22) Date of filing: 22.12.1994
(51) Int. Cl.: H02G 3/08

(54) **A METHOD AND A DEVICE AT AN ELECTRICAL INSTALLATION BOX**
METHODE UND VORRICHTUNG FÜR ELEKTRISCHE INSTALLATIONSDOSE
PROCEDE ET DISPOSITIF DESTINES A UN COFFRET DE RACORDEMENT ELECTRIQUE

(30) Priority: 23.12.1993 SE 9304274
(43) Date of publication of application: 09.10.1996
(73) Proprietor: IDEALPLAST AB, S-501 02 Boras (SE)
(72) Inventor: HAGBERG, Roland, S-512 76 Hillared (SE)
(74) Representative: Petri, Stellan
(86) International application number: SE9401240
(87) International publication number: WO9517776

(56) References cited:
- EP-A- 0 544 499

## Description

### Technical Field

Electrical connection boxes are presently used to a great extent for mounting in walls and ceilings. The boxes are connected by means of protective tubing before finalizing the walls and ceilings, so that the wiring between distribution boxes and connection boxes can be done after the walls are finalized. The connection boxes are preferably of three types, namely ordinary connection boxes, device boxes and lamp boxes.

The boxes are normally cylinder shaped with a bottom and an open side wall. The cylindrical sidewall or mantel wall is provided with holes for electrical wires. In some cases only notches for holes are provided, so that the holes may be finalized in connection with mounting only in positions which come into question for a certain use. Connection pieces protrude from the outside of the box at the holes or notches and are intended for receiving the protective tubes.

Tubes and boxes are commonly manufactured of plastic.

### Background of the Invention

In later times the question about oversensitivity to electricity has become increasingly urgent. A possible cause for such oversensitivity can be electrical fields, for example fields that occur in the vicinity of electrical conductors in wiring in walls and ceilings in ordinary buildings.

In order to reduce the electrical field strength from such fields it is known to use shielded cable at wiring. This is possible at cleaning-up of existing installations as well as in new installations. As the connection boxes used today are of plastic the electrical fields around the connection boxes need not be shielded.

### Short Summary of the Invention

An object of the present invention is to obtain a reduction of the electrical field strength in entire electrical installations, inclusive of the connection boxes. According to the invention as disclosed in method claim 1 and device claim 2 it shall also be possible to achieve the object in current installations as well as in new installations.

These objects are according to the invention achieved in that an insert of electrically conducting material is inserted in the connection box and in that a cover of electrically conducting material is arranged over the open side of the connection box in electrical contact with the insert. Both the insert and the cover are thereafter electrically connected to earth. The earth referred to here is preferably the protective earth commonly provided in buildings.

The arrangement of an insert in the connection box shall not according to the invention limit the possibilities for wiring to the inner space of the connection box, for which reason the insert is provided with holes or hole notches, which by correctly installing the insert in the connection box lie in front of the holes or hole notches in the connection box. Other advantages of the invention appear from the following description in combination with the attached claims.

### Brief Description of the Drawings

The invention will be further described by means of embodiments under reference to the attached drawings, in which
Fig 1 shows an insert according to the invention with a cover belonging thereto,
Fig 2 is a perspective view of a conventional connection box for use together with the insert according to the invention,
Fig 3 is a top view of an insert according to the invention,
Fig 4 is a section along the line IV-IV in Fig 3,
Figs 5 and 6 show an alternative embodiment of the insert according to the invention, and
Figs 7 and 8 show another alternative embodiment of the insert according to the invention.

### Detailed Description

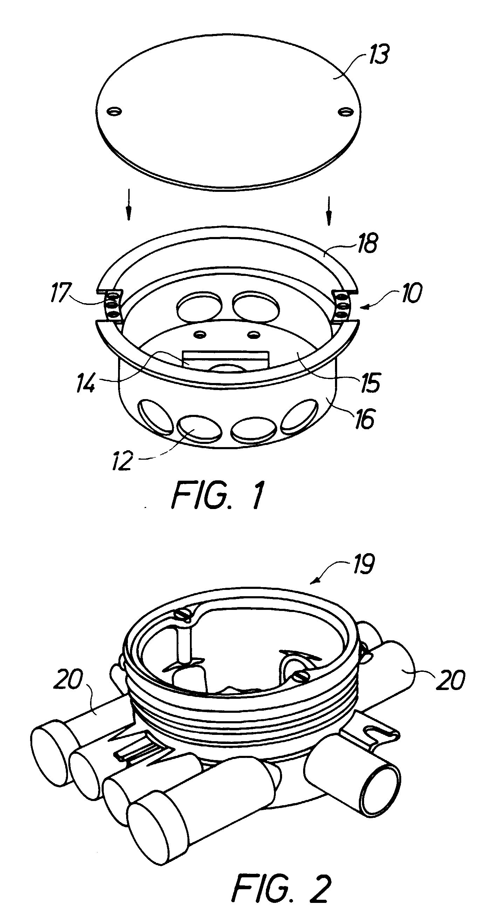

In the embodiment shown in Fig 1 an insert according to the invention is designed as a cylindrical cup with a bottom 15. A side wall 16 is peripherally connected to the bottom 15. Several holes 12 are arranged in the sidewall 16, and the disposal of the holes in the insert corresponds to the disposal of connection pieces of the electrical connection box in which the insert is to be arranged. A conventional electrical connection box is described below under reference to Fig 2. The insert according to Fig 1 is to be mounted in a connection box, which normally is provided with screw attachment means at two diametrically opposed places internally in the box. The insert 10 has two corresponding attachment means in the form of portions 17 extending radially inwardly from the mantle surface of the insert. In the shown example the portions 17 form a part of a flange 18 extending radially outwardly from the top of the insert. In the flange 18 two sections are cut out in diametrically opposing places and are thereafter folded in towards the center of the insert in order to form the portions 17.

The insert according to Fig 1 is made of stamped plate, but other manufacturing methods and materials are also possible. The insert can for example be made of forged aluminium. Depending on choice of material and manufacturing methods the holes can be made in different ways, for example by punching or drilling.

In certain cases it may be preferred not to provide holes in the sidewall in advance. In such cases the sidewall may instead be provided with notches, for example in the form of so called "knock outs". A box 10, which is provided with holes 12, can also on its mantle surface be wound with a band of for example conducting silicon material, which thus closes the protective shield.

Fig 2 shows a conventional connection box, which is suitable for housing an insert 10 according to the invention. The connection box 19 is conventionally designed with a bottom and a cylindrical wall attached thereto. Holes are arranged in the wall, and connection pieces 20 for receiving electrical protective tubing extend out from the outside of the box at the holes. The holes in the connection pieces have positions corresponding to the holes 12 in the insert 10.

As mentioned above, the invention is also applicable to other types of connection boxes, for example device boxes and lamp boxes.

At different types of installation boxes the bottom and/or the internal mantle surface is designed in different ways. Asymmetrical portions internally in the installation box 19 are preferably used for preventing mutual rotation between the insert 10 and the connection box 19.

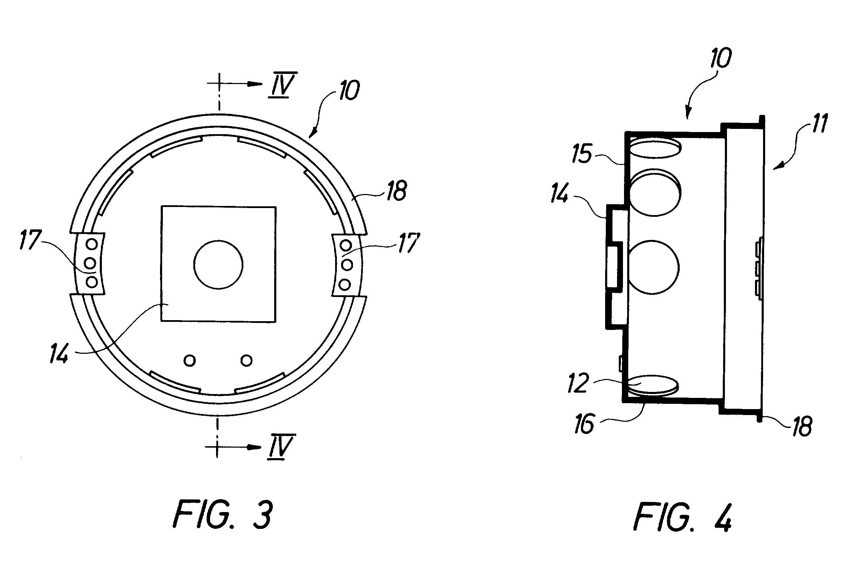

Fig 3, which is a top view of the insert 10 according to Fig 1, shows a protruding portion 14, which is designed with such dimensions that it is received in a corresponding recess in the bottom of the installation box. As the shape is rectangular, mutual rotation between the connection box and the insert is prevented.

The protruding portion 14 also appears clearly in Fig 4, also showing the flange 18 clearly.

As mentioned above, different types of connection boxes are designed with different inner mantle surfaces and bottoms.

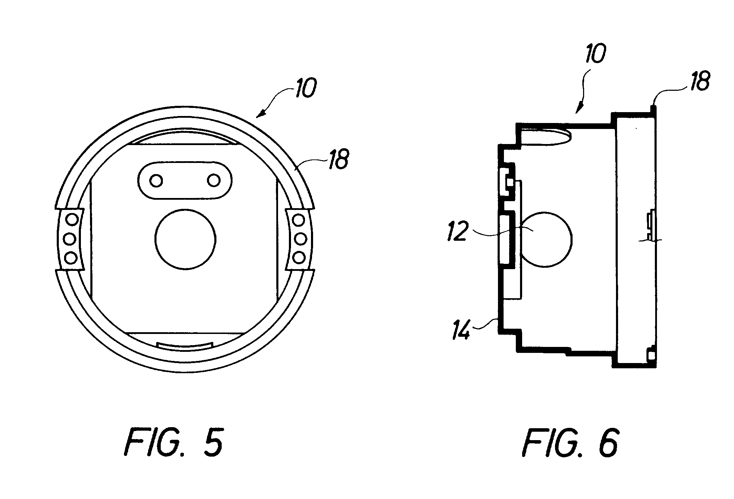

Figs 5 and 6 show an insert 10 according to the invention for use together with a device box. As appears in Fig 6, the number of holes in the insert and the position of the holes vary within the scope of the invention.

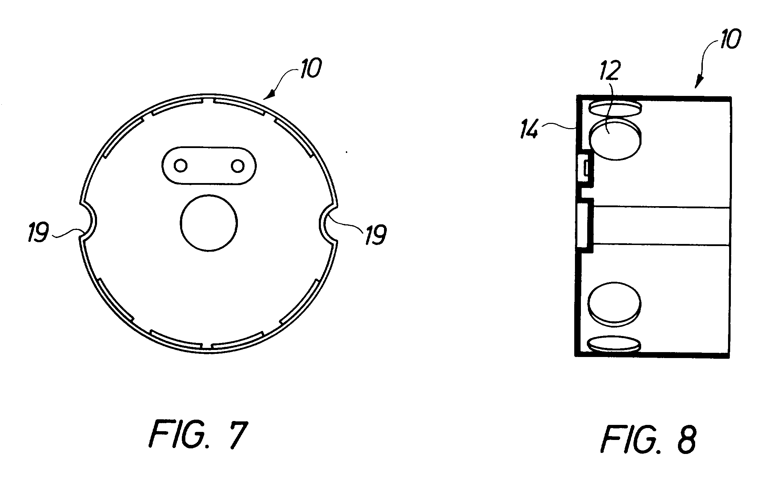

Figs 7 and 8 show another embodiment of an insert according to the invention. Fig 7 is a top view from the open side of the insert. The embodiment according to Fig 7 of the insert according to the invention differs from the embodiments described above mainly in that the cylindrical wall has two diametrically opposed recesses 19. The recesses 19 have shapes and dimensions corresponding to internal tubing means of a lamp box for receiving screws or the like.

As appears from Fig 8, the bottom of the insert 10 is substantially planar, so that the recesses 19 in this embodiment cooperate in preventing mutual rotation between the insert and the connection box.

Connection boxes usually have a box ring, which is arranged in an internal groove in the box. For use in such cases the box ring is removed, whereafter the flange 18 of the box insert will be received in this groove.

It is within the scope of the invention to replace the cover 13, which above all is used at connection boxes, with an electrical switch or a corresponding part, which is attached in the box. In order to guarantee the shielding it may be necessary to separately connect this equipment with earth and not only with the insert.

## Claims

1. A method for obtaining a reduction of the electrical field strength at an electrical connection box of electrically non-conducting material having an open side, a bottom and sidewalls associated with the bottom and having several holes or hole notches for lead-through of electrical cables, the method comprising the steps of:
inserting an insert (10) of electrically conducting material in the connection box,
providing holes (12) in the insert (10) in front of at least one of the box holes,
arranging a cover (13) of electrically conducting material over the open side of the connection box in electrical contact with the insert, and electrically earthing the insert (10).

2. A device for use with an electrical connection box of plastic material with an open side, a bottom, and sidewalls associated with the bottom and having several holes or hole notches for lead-through of electrical cables, the device comprising
an insert (10), provided with a bottom and made of an electrically conducting material, adapted to be arranged in the connection box, so that the insert (10) covers the bottom and the sidewalls of the connection box, the insert (10) being provided with holes or hole notches in front of the holes or hole notches in the connection box, and
a cover (13) of electrically conducting material adapted to cover the open side of the connection box, the cover being electrically connected with the insert and with earth.

3. A device according to claim 2, **characterized** in that the insert (10) has portions (14) protruding axially from the bottom for receiving corresponding recesses in the connection box for preventing mutual rotation of the insert relative the connection box.

4. A device according to claim 2, **characterized** in that the insert (10) is made of die-cast aluminium.

5. A device according to claim 2, **characterized** in that the insert (10) is made of pressed plate.

6. A device according to claim 2, **characterized** in that the insert (10) is a circular cylindrical box with a circular bottom (15) and an open side opposite the bottom (15).

## Patentansprüche

1. Ein Verfahren zum Erzielen einer Reduktion der elektrischen Feldstärke an einer elektrischen Anschlußdose aus elektrisch nicht-leitendem Material mit einer offenen Seite, einem Boden, mit dem Boden verbundenen Seitenwänden und mit mehreren Löchern oder Schlitzlöchern zur Durchführung von elektrischen Kabeln, wobei das Verfahren die folgenden Schritte aufweist:
Einsetzen eines Einsatzes (10) aus elektrisch leitendem Material in die Anschlußdose,
Vorsehen von Löchern (12) in dem Einsatz (10) vor wenigstens einem der Dosenlöcher,
Anordnen eines Deckels (13) aus elektrisch leitendem Material über der offenen Seite der Anschlußdose in elektrischem Kontakt mit dem Einsatz und Elektrischerden des Einsatzes (10).

2. Eine Vorrichtung zur Verwendung in Verbindung mit einer elektrischen Anschlußdose aus Kunststoffmaterial mit einer offenen Seite, einem Boden, Seitenwänden, die mit dem Boden verbunden sind, sowie mit mehreren Löchern oder Schlitzlöchern zur Durchführung von elektrischen Kabeln, wobei die Vorrichtung aufweist:
einen Einsatz (10), der mit einem Boden versehen, aus einem elektrisch leitenden Material hergestellt und dazu befähigt ist, in der Anschlußdose angeordnet zu werden, so daß der Einsatz (10) den Boden und die Seitenwände der Anschlußdose bedeckt, wobei der Einsatz (10) mit Löchern oder Schlitzlöchern vor den Löchern oder den Schlitzlöchern in der Anschlußdose versehen ist, und
einen Deckel (13) aus elektrisch leitendem Material, der dazu befähigt ist, die offene Seite der Anschlußdose zu bedecken, wobei der Deckel mit dem Einsatz und mit Erde elektrisch verbunden ist.

3. Eine Vorrichtung nach Anspruch 2, **dadurch gekennzeichnet**, daß der Einsatz (10) Bereiche (14) aufweist, welche von dem Boden axial vorstehen, um entsprechende Ausnehmungen in der Anschlußdose zum Verhindern einer gegenseitigen Drehung des Einsatzes relativ zu der Anschlußdose aufzunehmen.

4. Eine Vorrichtung nach Anspruch 2, **dadurch gekennzeichnet**, daß der Einsatz (10) aus Druckgußaluminium hergestellt ist.

5. Eine Vorrichtung nach Anspruch 2, **dadurch gekennzeichnet**, daß der Einsatz (10) aus Preßblech hergestellt ist.

6. Eine Vorrichtung nach Anspruch 2, **dadurch gekennzeichnet**, daß der Einsatz (10) eine kreiszylindrische Dose mit einem kreisförmigen Boden (15) und einer offenen Seite ist, welche dem Boden (15) gegenüberliegt.

## Revendications

1. Procédé permettant d'obtenir une réduction de l'intensité du champ électrique au niveau d'un boîtier de connexion électrique, en matériau non conducteur de l'électricité, ayant un côté ouvert, un fond et des parois latérales associées au fond et ayant plusieurs trous ou entailles de trou destinés au passage de câbles électriques, le procédé comprenant les étapes d' :
insertion d'une pièce rapportée (10) en matériau conducteur de l'électricité dans le boîtier de connexion,
agencement de trous (12) dans la pièce rapportée (10) devant au moins l'un des trous de boîtiers,
agencement d'un couvercle (13) en matériau électroconducteur sur le côté ouvert du boîtier de connexion, en contact électrique avec la pièce rapportée,
mise à la masse électrique de la pièce rapportée (10).

2. Dispositif à utiliser avec un boîtier de connexion électrique en matière plastique, ayant un côté ouvert, un fond, et des parois latérales associées au fond et ayant plusieurs trous ou entailles de trou destinés au passage de câbles électriques, le dispositif comprenant :
une pièce rapportée (10) pourvue d'un fond et constituée en matériau électroconducteur, adaptée de façon à être agencée dans la boîtier de connexion, de manière que la pièce rapportée (10) recouvre le fond et les parois latérales du boîtier de connexion, la pièce rapportée (10) étant pourvue de trous ou d'entailles de trou devant les trous ou entailles de trou ménagées dans le boîtier de connexion, et
un couvercle (13) en matériau électroconducteur, adapté de façon à recouvrir le côté ouvert du boîtier de connexion, le couvercle étant relié électriquement à la pièce rapportée et à la masse.

3. Dispositif selon la revendication 2, caractérisé en ce que la pièce rapportée (10) présente des parties (14) faisant saillie axialement du fond, afin de loger dans le boîtier de connexion des cavités correspondantes, servant à empêcher toute rotation mutuelle de la pièce rapportée par rapport au boîtier de connexion.

4. Dispositif selon la revendication 2, caractérisé en ce que la pièce rapportée (10) est en aluminium moulée sous pression.

5. Dispositif selon la revendication 2, caractérisé en ce que la pièce rapportée (10) est constituée d'une plaque pressée.

6. Dispositif selon la revendication 2, caractérisé en ce que la pièce rapportée 10 est un boîtier cylindrique circulaire ayant un fond circulaire (15) et un côté ouvert opposé au fond (15).
